# EUROPEAN PATENT APPLICATION

(11) **EP 4 851 489 A1**
(43) Date of publication of application: **09.12.2026**
(21) Application number: 25711174.0
(22) Date of filing: 30.01.2025
(51) Int. Cl.: F16H 21/22, F16H 21/40, F01B 9/02

(54) **TRANSMISSION MECHANISM**

(30) Priority: 30.01.2024 ES 202430078
(71) Applicant: Becares Fernandez, Jose Carlos, 08253 Sant Salvador de Guardiola Barcelona (ES)
(72) Inventor: Becares Fernandez, Jose Carlos, 08253 Sant Salvador de Guardiola Barcelona (ES)
(74) Representative: Ponti & Partners, S.L.P
(86) International application number: PCT/ES2025/070042
(87) International publication number: WO 2025/163230

(57) **Abstract**

Transmission mechanism with a structure (1) configured to rotatably house a first crankshaft (3) rotating on a first shaft (31), and a second crankshaft (4) rotating on a second shaft (41), with a first crank (33) and a second crank (43), a first connecting rod (34) connected to the first crankshaft (3) at a first joint (33a) located at a first radial distance (33b) from the first shaft (31), and a second connecting rod (44) connected to the second crankshaft (4) at a second joint (43a) located at a second radial distance (43b) from the second shaft (41), and a lever (5) rotatably connected to the structure (1) at a fulcrum (51), in order to achieve a particular efficiency in the transmission of the movement and of the energy generated by devices such as an electric generator or a combustion engine.

## Description

The present invention relates to a transmission mechanism with a structure configured to rotatably house a first crankshaft with a first crank rotating on a first shaft, and a second crankshaft with a second crank rotating on a second shaft, a first connecting rod connected to the first crankshaft at a first radial distance from the first shaft, and a second connecting rod connected to the second crankshaft at a second radial distance from the second shaft, both first and second connecting rods being rotatably connected to a lever, in turn rotatably connected to the structure in a support or fulcrum, incorporating considerable innovations and advantages.

### Background of the invention

The development of different variants of machinery and transmission mechanisms seeks to achieve more efficient work and a reduction in energy consumption. The current situation of energy shortages and destruction of the ecological environment is well known. Thus, the efficient use of energy, the conservation of the environment and the research and development of new energies and new structures is an objective in the industrialised world.

Current mechanical equipment sometimes uses transmissions by gears or belts to transmit power, establishing a transmission ratio. The current designs mainly seek to reduce the loss of power transmission, and finally the energy saving. Said objective can also be achieved by means of a better lubrication system to reduce the friction of the components and reduce the loss of power transmission.

In this regard, a low-power starter is known that uses the double-lever principle for conversion, as disclosed in CN215370090. It comprises a base, a drive shaft, a starter shaft and a double-lever mechanism. The drive shaft uses the double lever principle to indirectly increase power to drive the starter shaft, and is rotatably connected with the base, requiring to be driven by a drive motor to rotate. And on said drive shaft are fixed a plurality of driving deflector rods that are arranged in equal intervals along the direction of the drive shaft. The starter shaft is indirectly driven by the drive shaft to rotate through the double-lever mechanism, so that the force required by the drive shaft to rotate the starter shaft is reduced.

Is otherwise known, as disclosed in WO2004055353, an autonomous mechanical multiplier is known that can be connected to a differential system to drive cars, trucks and industrial machines or to generate pressure. It can also be used as a step-down connection between a power source and an alternator. Furthermore, they can be used to rotate the crankshaft of a combustion engine under the effect of fuel explosion in the combustion chamber, moving one side of the lever, and, with the repulsive force, dragging the crankshaft to the other side of the lever.

Despite all the above, it is still desirable to develop a transmission mechanism that enables a particular efficiency in the transmission of the movement and energy generated by devices such as an electric generator or a combustion engine.

### Description of the invention

The objective of the present invention is to provide a lever transmission mechanism, composed of a plurality of cranks and connecting rods, which connect a first rotating shaft with a second rotating shaft, in such a way that, by driving the first rotating shaft, either manually or with a motor, an electrical energy can be generated by the second rotating shaft, being connected, for example, to an electrical generator. Due to the special configuration of the transmission mechanism, there is a particular efficiency in the transmission of motion.

According to this objective, the present invention provides a transmission mechanism comprising a structure configured to rotatably house a first crankshaft rotating on a first shaft, and a second crankshaft rotating on a second shaft, wherein the first crankshaft comprises a first crank and the second crankshaft comprises a second crank, and comprises a first connecting rod connected to the first crankshaft at a first joint located on the first crankshaft at a first radial distance from the first shaft, and a second connecting rod connected to the second crankshaft at a second joint located on the second crankshaft at a second radial distance from the second shaft, wherein the first connecting rod and the second connecting rod are rotatably connected to a lever, which in turn is rotatably connected to the structure through a fulcrum. Consequently, the first joint and the second joint rotate rotatably in phase, i.e. at the same angle, and the first crankshaft and the second crankshaft rotate with equal angular velocities, and in the same direction, with a high efficiency in the transmission of the mechanical energy, and a minimum loss of performance.

Likewise, in the transmission mechanism of the present invention; the first connecting rod comprises a first section of first connecting rod and a second section of first connecting rod, rotatably connected at a third joint, such that both sections of first connecting rod can transmit the incoming rotary movement, i.e. the movement of the first crankshaft to the lever, and the second connecting rod comprises a first section of second connecting rod and a second section of second connecting rod, rotatably connected at a fourth joint, such that both sections of second connecting rod can receive the movement of the lever and transmit the movement to the rotary shaft of the second crankshaft towards an output element of the transmitted energy.

In the mechanism of the present invention, the intersection of a horizontal line through the first shaft and the second shaft with a vertical line through the fulcrum of support define an origin, and;
- the positions of the first joint and the second joint are configured to be aligned with the origin according to a first straight line during operation of the transmission mechanism, so that the first joint and the second joint rotate rotatably in phase, and
- the positions of the third joint and the fourth joint are configured to be aligned according to a second straight line during the operation of the transmission mechanism, so that the transmitted movement is in phase, synchronised and with the same angular velocity.

It has been observed that the claimed transmission mechanism is highly efficient, allowing to increase and/or multiply the power of an incoming rotary shaft to an output rotary shaft, all while maintaining a very reduced distance between said shafts and the same rotational angular speed between both shafts. In fact, the claimed mechanism ensures the synchronisation of the movement of the shafts, so that the power transmission is fluid and without jerks or jumps.

Preferably, said lever comprises a lever arm and said second connecting rod is rotatably connected to the lever arm such that both second connecting rod sections are arranged between the fulcrum and the first connecting rod rotatably connected to the same lever arm.

Thanks to this, the mechanism includes or defines a type of second-generation lever wherein as the load is closer to the fulcrum than the point where the stress is applied, a more efficient distribution of the applied forces is obtained, so that less effort is needed to obtain a greater amount of mechanical energy. Furthermore, greater control over the load is generated, which facilitates more precise and controlled movements.

Again preferably, the positions of the first joint and the second joint are configured to be aligned with the origin according to a first straight line so that said first straight line remains parallel to the lever or lever arm during operation of the mechanism.

Thanks to this, the assembly of the connecting rods, the lever and the cranks move synchronously in bloc so as to increase the efficiency in the transmission of the movement thus increasing the efficiency in increasing the power from the first input shaft to the second output shaft.

Advantageously, the mechanism comprises at least one first guide arranged in the structure to guide the reciprocating displacement of the third joint, and at least one second guide arranged in the structure to guide the reciprocating displacement of the fourth joint.

Preferably, each of the ends of said first and second support shafts (E1, E2) is associated with a displaceable slide and a respective guide, so as to increase the stabilisation of the third and fourth joints.

In this way, when the first shaft transmits the movement to the rest of the transition mechanism, the vertical displacement of the third and fourth joints is along said guides, ensuring the verticality of the movement of said third and fourth joints, preventing the two assemblies of connecting rods from destabilising and blocking the system.

Advantageously, said third joint further comprises a distal end of the first section of the first connecting rod rotatably mounted on said first support shaft (E1), and a proximal end of the second section of the first connecting rod rotatably mounted on the same first support shaft (E1).

Again advantageously, said fourth joint further comprises a distal end of the first section of the second connecting rod rotatably mounted on said second support shaft (E2), and a proximal end of the second section of the second connecting rod rotatably mounted on the same second support shaft (E2).

The joint between the two sections of the first connecting rod and the joint between the two sections of the second connecting rod allows the angular speeds of the shafts to be equalised so that the transmission of movement occurs constantly without sudden changes, generating a more productive transmission.

According to another aspect of the invention, the structure comprises a first housing that receives the first connecting rod therethrough, wherein the first connecting rod comprises a first guide configured to slide longitudinally inside the first housing, so that only the vertical movement of the third joint is allowed, blocking the horizontal and lateral movement, which results in an adequate synchronisation of the first crankshaft with the second crankshaft.

In addition, the first housing is located at the height of the third joint, wherein the first housing has a vertical dimension of at least the displacement of the third joint, so that the first housing covers the third joint at all times in its displacement.

Additionally, the structure comprises a second housing that houses the second connecting rod therethrough, where the second connecting rod comprises a second guide configured to slide longitudinally inside the second housing, so that only the vertical movement of the fourth joint is allowed, blocking the horizontal and lateral movement, which results in an adequate synchronisation of the first crankshaft with the second crankshaft.

On the other hand, the second housing is located at the height of the fourth joint, where the second housing has a vertical dimension of at least the displacement of the fourth joint, so that the second housing covers the fourth joint at all times in its displacement.

In a preferred embodiment of the invention, the first crankshaft and/or the second crankshaft comprise at least one counterweight, in order to compensate imbalances and avoid vibrations.

Optionally, the first crankshaft comprises at least one first coupling, in order to have the possibility of being mechanically connected to an actuator, such as an electric or combustion motor.

Additionally, the second crankshaft comprises at least one second coupling, so that it has the possibility of being mechanically connected to a movable, or energy-producing, element, such as an electric generator.

According to a preferred embodiment of the invention, the transmission mechanism comprises at least two assemblies of first connecting rod, first crank, second connecting rod, second crank and lever in parallel, so that the transmission is smoother, without jerks or jumps.

Preferably, according to one embodiment, the transmission mechanism comprises at least two first crankshafts rotating on the first shaft, at least two first connecting rods respectively connected to each of said first crankshafts, at least two second crankshafts rotating on the second shaft, at least two second connecting rods respectively connected to each of said second crankshafts, and at least two levers mounted in parallel on the same fulcrum, each being rotatably fixed to their respective first and second connecting rods.

Thanks to this, the load applied to the transmission mechanism can be shared more evenly between the two assemblies, so that all the applied stress is distributed between the two assemblies reducing the risk of overload or premature failure. The load is distributed more evenly, reducing wear on the moving parts and prolonging the useful life of the components.

Preferably, according to this embodiment including two assemblies, the at least two first crankshafts each comprise a first crank, and said first cranks are mounted on the first shaft maintaining an offset angle α with respect to each other. Furthermore, the at least two second crankshafts each comprise a second crank, and said second cranks are mounted on the second shaft maintaining an offset angle α with respect to each other. Preferably, said offset angle α in the rotation is greater than 0° and less than 180°.

In this way, the first crank of a first assembly is offset in the rotation with respect to the first crank of a second assembly, so that at the moment of starting no assembly is blocked when its position coincides at the vertical upper or lower point, i.e. at 0° and 180°.

Thanks to having two assemblies in parallel and offset with each other, one assembly pulls on the other, preventing the connecting rods from being locked with the cranks, so that the risk of locking or failure in the mechanism is reduced, making it smoother and more efficient.

According to another embodiment of the invention, the transmission mechanism comprises at least three assemblies of first connecting rod, first crank, second connecting rod, second crank and a lever, in parallel, wherein the first crank of a first assembly in parallel is offset with respect to the first crank of a second assembly in parallel, attached to the first assembly, a number of degrees resulting from dividing 360 degrees by the total number of assemblies in parallel, so that for three assemblies the offset would be 120 degrees, for four it would be 90 degrees, and so on and so forth. In this way, the possibility of there being retention points in the rotation, and of jumps and discontinuities in the rotary and linear movement, is eliminated. It should also be noted that the measurements must be the same of all the parts for each assembly, and only the connection point with the respective crankshaft changes.

Thanks to being able to assemble three or more assemblies in parallel, the total capacity of the system is increased so that it can cover greater power demands without the need to resort to larger equipment.

The attached drawings show, by way of non-limiting example, a transmission mechanism, constituted in accordance with the invention. Other characteristics and advantages of the transmission mechanism, object of the present invention, will be evident from the description of a preferred, but not exclusive embodiment, which is illustrated by way of non-limiting example in the attached drawings.

### Brief description of the drawings

To better understand the description made herein, a set of drawings has been provided wherein, schematically and solely by way of a non-limiting example, a practical case of an embodiment is represented.
Figure 1 is a side view of the transmission mechanism in a first position, according to the present invention;
Figure 2 is a perspective view of the transmission mechanism in a first position, according to the present invention;
Figure 3 is a side view of the transmission mechanism in a second position, according to the present invention;
Figure 4 is a view of a schematic diagram of the transmission mechanism, according to the present invention;
Figure 5 is a perspective view of a second embodiment of the transmission mechanism, according to the present invention;
Figure 6 is a front view of the embodiment of figure 5, of an assembly without the structure, according to the present invention;
Figure 7 is a perspective view of the embodiment of figure 5, of two assemblies without part of the structure, according to the present invention;
Figure 8 is a perspective view of the embodiment of figure 5, without the structure, according to the present invention;
Figure 9 is a front view of the embodiment of figure 5, of two assemblies without the structure, according to the present invention;
Figure 10 is a front view of the embodiment of figure 5, without a part of the structure, the two assemblies are in a certain position of the rotation cycle, according to the present invention;
Figure 11 is a front view of the embodiment of figure 5, without a part of the structure, the two assemblies are in a second determined position of the rotation cycle, according to the present invention;

### Description of a preferred embodiment

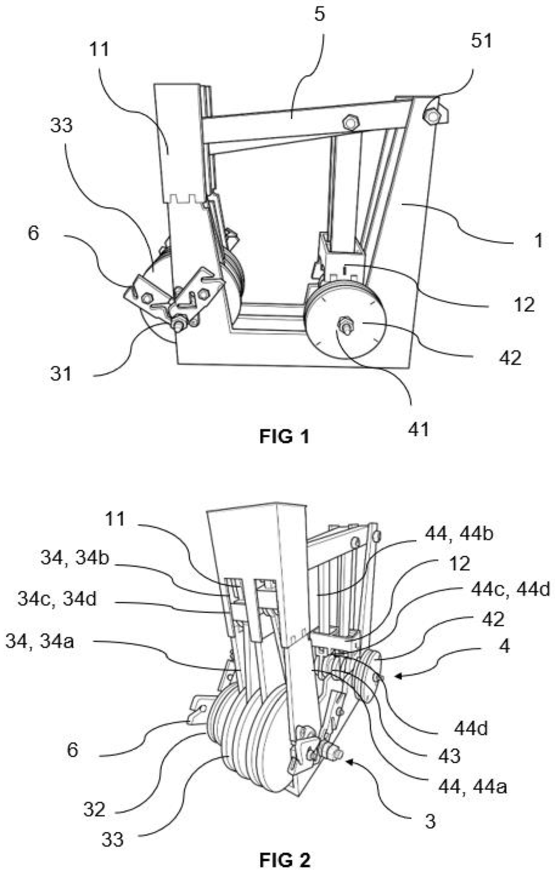

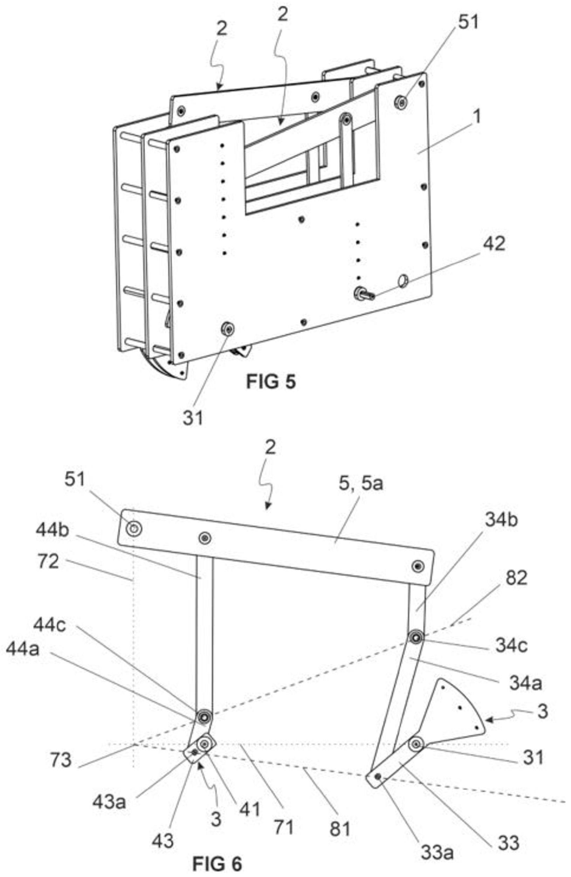

A first embodiment of the transition mechanism of the present invention is described below, referring to figures 1 to 4, and a second embodiment referring to figures 5 to 11.

Figure 1 shows a side view of the transmission mechanism in a first position, with the structure (1) as general support of the first crankshaft (3) and its first shaft (31), and of the second crankshaft (4) with its second shaft (41). The position of the first housing (11), above one side of the structure (1), and of the second housing (12), which houses the second guide (44d) and the second connecting rod (44), can be seen. From said side view, the presence of the first crank (33) is observed, actuated by the first crankshaft (3), having a counterweight (6), and a second coupling (42), available for the transmission of movement to an output element, such as an electric generator. We should mention the presence of a lever (5), capable of rotating with respect to the fulcrum (51), mechanically connecting the second connecting rod (44) with the first connecting rod (34).

In figure 2, a perspective view of the transmission mechanism can be seen in a first position, showing in the foreground the first housing (11), the first crankshaft (3) with a first coupling (32) and a counterweight (6), and connected to a first crank (33), to a first connecting rod (34), and in particular to a first section of first connecting rod (34a), connected in turn to a second section of first connecting rod (34b) by means of a third joint (34c), housed in a first guide (34d). In the middle distance, the second housing (12) can be seen above the second crankshaft (4), which has a second coupling (42), being connected by a second crank (43) to a second connecting rod (44), and, in particular, to a first section of second connecting rod (44a) connected to a second section of second connecting rod (44b) by means of a fourth joint (44c) housed in a second guide (44d).

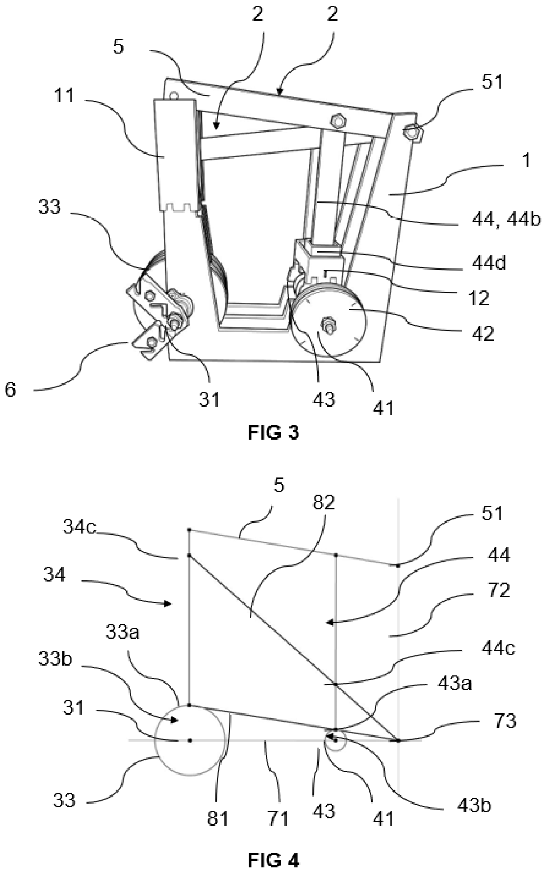

In figure 3, a side view can be observed of the transmission mechanism in a second position, in the same way with the structure (1) giving general support, on the one hand, to a first housing (11) on a first crankshaft (3) with a first shaft (31), which in turn has a first crank (33) and a counterweight (6). On the other hand, the structure (1) supports a second housing (12) on a second crankshaft (4) with a second shaft (41), having a second coupling (42), connected to a second crank (43), and a second connecting rod (44), which has a first section of second connecting rod (44a) and a second section of second connecting rod (44b), also observing the position of the second guide (44d) that houses a fourth joint (44c). Above, it has a lever (5), rotatably connected at a fulcrum (51). It can be observed that the transmission mechanism in this case has two assemblies (2) in parallel, of first connecting rod (34) and second connecting rod (44) with the other associated elements.

In figures 4 and 6, a view of a schematic diagram of the transmission mechanism can be seen, wherein the position of a first shaft (31), connected to a first crank (33), with a first joint (33a) at a first distance (33b) with a first connecting rod (34) is shown. Above, the position of a third joint (34c) can be seen. On the other hand, the position of a second shaft (41), connected to a second crank (43), with a second joint (43a) at a second distance (43b) with a second connecting rod (44) is shown. A fourth joint (44c) at an upper point is also observed. Above, the lever (5) with the ability to rotate on a fulcrum (51) is observed. It should be noted that the structure (1) rests on a horizontal line (71), whose perpendicular is a vertical line (72), which must pass through the fulcrum (51). Its intersection defines a point of origin (73), which marks the origin of both a first straight line (81) and a second straight line (82). The first straight line (81) passes through the first joint (33a) and the second joint (43a), while the second straight line (82) passes through the third joint (34c) and the fourth joint (44c).

Figures 5 to 9 show an embodiment similar to those of figures 1 to 4, where a second embodiment of transmission mechanism according to the claims is observed.

Figure 5 shows a perspective view of a second embodiment of a transmission mechanism with a structure (1) formed by three elements: two outer covers and a central divider. The structure (1) gives rigidity and support to the transmission mechanism, in addition to separating the two assemblies (2), positioned in parallel.

In figure 6, a first crankshaft (3) fixed to the first shaft (31) is shown, said first crankshaft (3) is provided with a first crank (33), which is connected to the first section of first connecting rod (34a) through the first joint (33a), at the same time, the first section of first connecting rod (34a) is connected to a second section of first connecting rod (34b) through the third joint (34c) and the second section of first connecting rod (34b) is rotatably connected to a lever (5) that transmits the movement to a second section of second connecting rod (44b), which is connected to a first section of second connecting rod (44a) through a fourth joint (44c), and where the first section of second connecting rod (44) is connected to a second crank (43) through a second joint (43a) transmitting the movement to a second shaft (41) which has a second coupling (42) coupled to receive the rotational movement of the first shaft with the increased power.

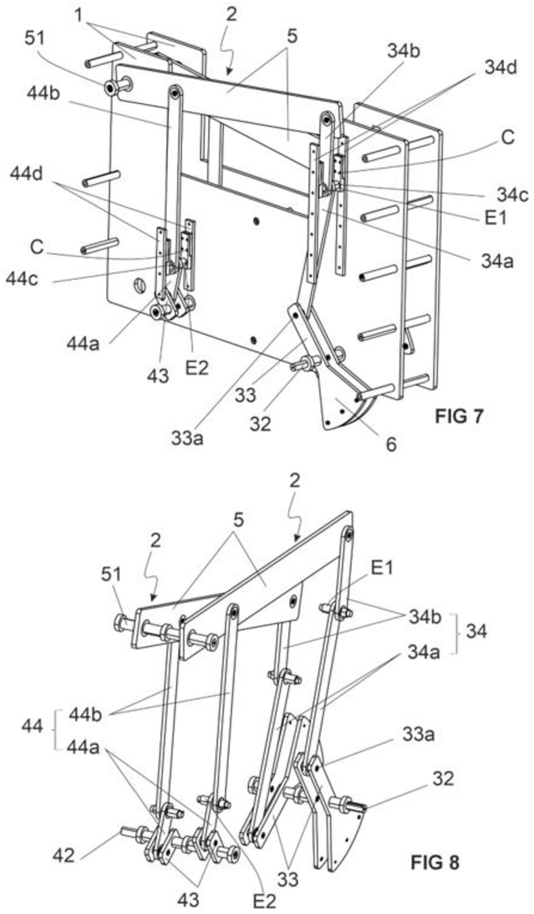

Figure 7 shows a perspective view of the second embodiment, a first assembly (2), a cover and the central divider of the structure (1) are shown, said divider separates a first assembly (2) from a second assembly (2). Furthermore, it shows that the third and fourth joints (34c, 44c) are connected to a first guide (34d) and a second guide (44d) respectively, to guide the vertical displacement of the third and fourth joints (34c, 44c), in order to prevent said third and fourth joints (34c, 44c) from being displaced horizontally or laterally in an undesired way, so as to prevent the transmission mechanism from being locked.

According to this embodiment, said first guide (34d) and second guide (44d) each comprise a first and second support shaft (E1, E2) associated to a displaceable slide (C) along its respective guide (34d, 44d).

Figure 8 shows a perspective view of the second embodiment, wherein two assemblies (2) mounted in parallel can be observed. The two assemblies (2) are in offset positions so as to allow smoother operation without sudden movements. In this figure, the structure has been omitted to facilitate the display of the two assemblies (2).

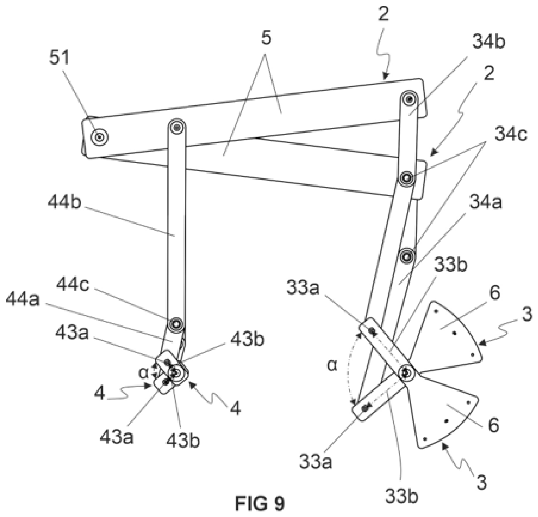

An elevation of the second embodiment is shown in figure 9. Each assembly (2) comprises a first crankshaft (3) mounted on the first shaft (31). In addition, each assembly (2) comprises a second crankshaft (4) mounted on the second shaft (41). The first cranks (33) of the crankshafts (3) are mounted offset with each other, at an angle α. In addition, the two second cranks (43) of the second crankshafts (4) are also mounted offset with each other, by an angle α. Although in this embodiment the first cranks (33) and the second cranks (34) are both offset by an angle α of 90°, it would also be possible for the value of α to be different for the group of first cranks (33) with respect to the group of second cranks (43). In other words, the first cranks (33) could be offset by an angle of 90° while the two second cranks (43) could be offset by 60°.

In addition, in this embodiment α is 90°, although it is also possible that α has a value between 0 and 180°. The offset of the two assemblies (2) allows one assembly (2) to pull the other assembly (2) during the operation of the transmission mechanism, preventing, when the first and second connecting rods (34, 44) are aligned with their respective cranks (33, 43), them from tending to change the rotation or be locked in alignment with the cranks.

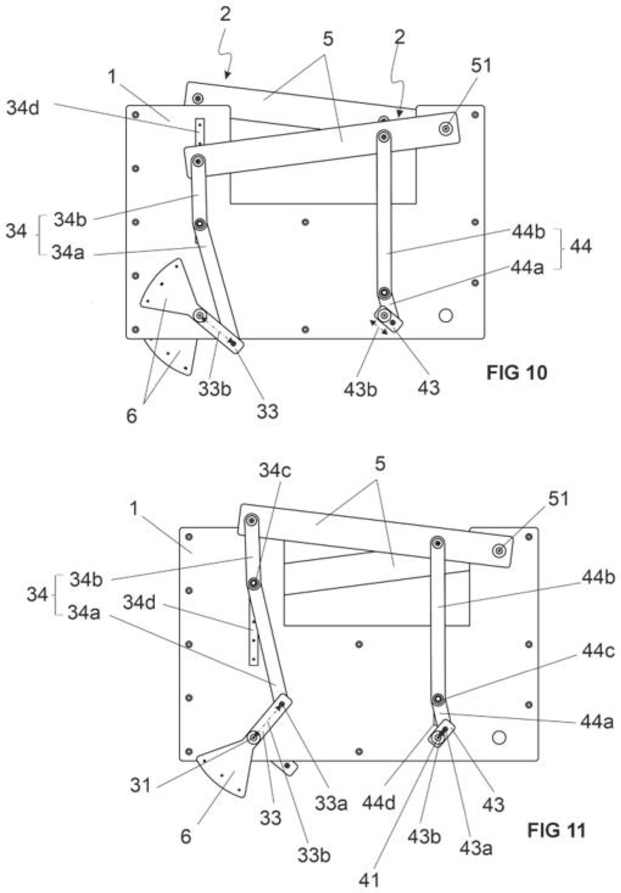

In figures 10 and 11, two elevation views of the second embodiment are shown, wherein the two assemblies (2) are offset by an angle α of 90°, i.e. a first assembly (2) is rotated from a second assembly (2) with respect to the rotation fulcrum (51). In figure 10, the lever (5) of a first assembly (2) is above the lever (5) of a second assembly (2); however,, in figure 11 it is the other way around, so that the two figures indicate two different positions at 90°, of the rotation cycle of each assembly (2).

More particularly, as seen in figures 1 and 2, the transmission mechanism comprises a structure (1), configured to rotatably house a first crankshaft (3) rotating on a first shaft (31), and a second crankshaft (4) rotating on a second shaft (41), wherein the first crankshaft (3) comprises a first crank (33) and the second crankshaft (4) comprises a second crank (43), and comprises a first connecting rod (34) connected to the first crankshaft (3) at a first joint (33a) located on the first crankshaft (33) at a first radial distance (33b) from the first shaft (31), and a second connecting rod (44) connected to the second crankshaft (4) at a second joint (43a) located on the second crank (43) at a second radial distance (43b) from the second shaft (41), wherein the first connecting rod (34) and the second connecting rod (44) are rotatably connected to a lever (5), which in turn is rotatably connected to the structure (1) at a fulcrum (51). We should specify that the first shaft (31) is located in the front part of the transmission mechanism, the second shaft (41) in the intermediate part, and the fulcrum (51) in the rear part.

It should be noted that, as seen in figure 4, the intersection of a horizontal line (71) through the first shaft (31) and the second shaft (41), with a vertical line (72) through the fulcrum (51) define an origin (73), where the positions of the first joint (33a), of the second joint (43a) and of the origin (73) are configured to be aligned in a first straight line (81) during the operation of the transmission mechanism.

More specifically, as shown in figure 2, the first connecting rod (34) comprises a first section of first connecting rod (34a) and a second section of first connecting rod (34b), rotatably connected at a third joint (34c).

On the other hand, as seen in figure 2, the second connecting rod (44) comprises a first section of second connecting rod (44a) and a second section of second connecting rod (44b), rotatably connected at a fourth joint (44c).

It should be noted that, as seen in figure 4, the positions of the third joint (34c), the fourth joint (44c) and the origin (73) are configured to be aligned on a second straight line (82) during operation of the transmission mechanism.

In a preferred embodiment of the invention, as seen in figures 1 and 2, the structure (1) comprises a first housing (11) that receives the first connecting rod (34) therethrough, wherein the first connecting rod (34) comprises a first guide (34d) configured to slide longitudinally inside the first housing (11).

Preferably, as can be seen in figures 1 and 2, the first housing (11) is located at the height of the third joint (34c), where the first housing (11) has a vertical dimension of at least the displacement of the third joint (34c).

Additionally, as seen in figures 2 and 3, the structure (1) comprises a second housing (12) that houses the second connecting rod (44) therethrough, wherein the second connecting rod (44) comprises a second guide (44d) configured to slide longitudinally inside the second housing (12).

More in detail, as can be seen in figures 2 and 3, the second housing (12) is located at the height of the fourth joint (44c), where the second housing (12) has a vertical dimension of at least the displacement of the fourth joint (44c).

Optionally, as seen in figures 1 and 2, the first crankshaft (3) and/or the second crankshaft (4) comprises at least one counterweight (6).

Additionally, as seen in figure 2, the first crankshaft (3) comprises at least one first coupling (32). Said first coupling (32) can be a grooved disc or any mechanism, such as a pinion or a pulley, preferably configured for the insertion of a first belt coupled, for example, to a driving element. The first shaft (31) could also be used directly, as a coupling element to a driving element, i.e. from shaft to shaft.

Additionally, as can be seen in figures 1 and 3, the second crankshaft (4) comprises at least one second coupling (42), which can also be a grooved disc or any mechanism, such as a pinion or a pulley, preferably configured for the insertion of a second belt coupled to an energy generating element. The second shaft (41) could also be used directly, e.g. for coupling to a generator, from shaft to shaft.

According to a preferred embodiment of the invention, as seen in figures 2 and 3, the transmission mechanism comprises at least two assemblies (2) of first connecting rod (34), first crank (33), second connecting rod (44), second crank (43) and lever (5) in parallel.

It should be noted that, as seen in figure 3, the first crank (33) of a first unit (2) is offset in rotation with respect to the first crank (33) of a second unit (2). Specifically, it is offset at a value between 0 and 180 degrees, avoiding the limit values, and preferably being a value close to or equal to 90 degrees.

Optionally, as seen in figure 3, the transmission mechanism comprises at least three assemblies (2) of first connecting rod (34), first crank (33), second connecting rod (44), second crank (43) and a lever (5) in parallel, where the first crank (33) of a first assembly (2) in parallel is offset with respect to the first crank (33) of a second assembly (2) in parallel, connected to the first assembly (2), a number of degrees resulting from dividing 360 degrees by the total number of assemblies (2) in parallel.

In short, the described transmission mechanism allows transferring energy and movement from a first coupling (32) to a second coupling (42), so that power generated by a source, such as a motor, is transferred to a device that performs a job, such as a generator, a compressor, a motor, fan belts, etc. The use of at least two assemblies (2) provided with a first articulated connecting rod (34) and a second articulated connecting rod (44) also allows the transmission of power from the first coupling (32) to the second coupling (41) in a highly efficient manner, making it possible to multiply the power of the input coupling to the output coupling.

The details, shapes, dimensions and other accessory elements, as well as the components used in the implementation of the transmission mechanism, may be suitably replaced by others that are technically equivalent and do not depart from the essentiality of the invention or from the scope defined by the claims included after the following list.

### List of numerical references:

- 1: structure
- 11: first housing
- 12: second housing
- 2: assembly
- 3: first crankshaft
- 31: first shaft
- 32: first coupling
- 33: first crank
- 33a: first joint
- 33b: first distance
- 34: first connecting rod
- 34a: first section of first connecting rod
- 34b: second section of first connecting rod
- 34c: third joint
- 34d: first guide
- 4: second crankshaft
- 41: second shaft
- 42: second coupling
- 43: second crank
- 43a: second joint
- 43b: second distance
- 44: second connecting rod
- 44a: first section of second connecting rod
- 44b: second section of second connecting rod
- 44c: fourth joint
- 44d: second guide
- 5: lever
- 51: fulcrum
- 6: counterweight
- 71: horizontal line
- 72: vertical line
- 73: origin
- 81: first straight line
- 82: second straight line
- E1: first support shaft
- E3: second support shaft
- C: slide

Although reference has been made to a specific embodiment of the invention, it is evident to a person skilled in the art that the transmission mechanism described herein is susceptible to numerous variations and modifications, and that all the aforementioned details can be replaced by other technically equivalent details, without departing from the scope of protection defined by the attached claims.

## Claims

1. Transmission mechanism comprising a structure (1) configured so as to house a first crankshaft (3) rotatably mounted on a first shaft (31), and a second crankshaft (4) rotatably mounted on a second shaft (41), wherein the first crankshaft (3) comprises a first crank (33) and the second crankshaft (4) comprises a second crank (43), said mechanism further comprising;
- a first connecting rod (34) connected to the first crankshaft (3) at a first joint (33a) located on the first crank (33) at a first radial distance (33b) from the first shaft (31),
- a second connecting rod (44) connected to the second crankshaft (4) at a second joint (43a) located on the second crank (43) at a second radial distance (43b) from the second shaft (41), and
- a lever (5) including a fulcrum (51) provided on the structure (1),
- where the first connecting rod (34) and the second connecting rod (44) are rotatably connected to the lever (5), **characterized in that**
- the first connecting rod (34) comprises a first section of first connecting rod (34a) and a second section of first connecting rod (34b) rotatably connected at a third joint (34c), both sections of first connecting rod (34a, 34b) being capable of transmitting the movement from the first crankshaft (3) to the lever (5), and
- the second connecting rod (44) comprises a first section of second connecting rod (44a) and a second section of second connecting rod (44b) rotatably connected at a fourth joint (44c), both sections of second connecting rod (44a, 44b) being capable of receiving the movement of the lever (5) and of transmitting movement to the second crankshaft (4), and
where the intersection of a horizontal line (71) passing through the first shaft (31) and the second shaft (41) with a vertical line (72) passing through the fulcrum (51) define an origin (73), and where the positions of the first joint (33a) and of the second joint (43a) are configured to be aligned with the origin (73) according to a first straight line (81) during the operation of the transmission mechanism, and
wherein the positions of the third joint (34c) and the fourth joint (44c) are configured to be aligned with the origin (73) according to a second straight line (82) during operation of the transmission mechanism.

2. Transmission mechanism according to claim 1, wherein said lever (5) comprises a lever arm (5a) and said second connecting rod (44) is rotatably connected to the lever arm (5a) so that both sections of second connecting rod (44a, 44b) are arranged between the fulcrum (51) and the first connecting rod (34) rotatably connected to the same lever (5) arm (5a).

3. Transmission mechanism according to claims 1 or 2, wherein the positions of the first joint (33a) and of the second joint (43a) are configured to be aligned with the origin (73) according to the first straight line (81), said first straight line (81) remaining parallel to the lever (5) or lever arm (5a) (5) during the operation of the mechanism.

4. Transmission mechanism according to any of the preceding claims, comprising at least one guide (34d) arranged in the structure (1) for guiding the reciprocating displacement of the third joint (34c), and at least one guide (44d) d arranged in the structure (1) for guiding the alternative displacement of the fourth joint (44c).

5. Transmission mechanism according to claim 4, wherein said third joint (34c) and said fourth joint (44c) each comprise a first and second support shaft (E1, E2) associated with a slide (C) movable along its respective guide (34d, 44d).

6. Transmission mechanism according to claim 5, wherein said third joint (34c) further comprises a distal end of the first section (34a) of the first connecting rod (34) rotatably mounted on said first support shaft (E1), and a proximal end of the second section (34b) of the first connecting rod (34) rotatably mounted on the same first support shaft (E1).

7. Transmission mechanism according to claim 5, wherein said fourth joint (44c) further comprises a distal end of the first section (44a) of the second connecting rod (44) rotatably mounted on said second support shaft (E2), and a proximal end of the second section (44b) of the second connecting rod (44) rotatably mounted on the same second support shaft (E2).

8. Transmission mechanism according to claims 5 to 7, wherein each of the ends of said first and second support shafts (E1, E2) is associated with a displaceable slide and a respective guide (34d, 44d).

9. Transmission mechanism according to any preceding claim, wherein the first crankshaft (3) and/or the second crankshaft (4) comprises at least one counterweight (6).

10. Transmission mechanism according to any one of the preceding claims, wherein the first crankshaft (3) comprises at least one first coupling (32) for connecting the first shaft (31) to an actuator device.

11. Transmission mechanism according to any of the preceding claims, wherein the second crankshaft (4) comprises at least one second coupling (42) for connecting the second shaft (41) to an energy producing device.

12. Transmission mechanism according to any of the preceding claims, comprising at least two first crankshafts (3) rotating on the first shaft (31), at least two first connecting rods (34) respectively connected to each of said first crankshafts (3), at least two second crankshafts (4) rotating on the second shaft (41), at least two second connecting rods (44) respectively connected to each of said second crankshafts (4), and at least two levers (5) mounted in parallel on the same fulcrum (51), wherein said first connecting rods (34) and said second connecting rods (44) are rotatably connected to their respective levers (5).

13. Transmission mechanism according to claim 12, wherein said at least two first crankshafts (3) each comprise a first crank (33), and wherein said first cranks (33) are mounted on the first shaft (31) so as to maintain an offset angle α in the rotation with respect to each other.

14. Transmission mechanism according to claim 12, wherein said at least two second crankshafts (4) each comprise a second crank (43), and wherein said second cranks (43) are mounted on the second shaft (41) so as to maintain an offset angle α in the rotation with respect to each other.

15. Transmission mechanism according to claims 10 and 11, wherein said offset angle α in the rotation is less than 180°.
